# FASCICULE DE BREVET EUROPEEN

(11) **EP 3 739 807 B1**
(45) Date de publication et mention de la délivrance du brevet: **30.09.2026**
(21) Numéro de dépôt: 20173117.1
(22) Date de dépôt: 06.05.2020
(51) Int. Cl.: H04L 9/00

(54) **DISPOSITIF DE PROTECTION DE DONNÉES CRYPTÉES ET PROCÉDÉ ASSOCIÉ**
SCHUTZVORRICHTUNG FÜR KRYPTOGRAPHISCH VERSCHLÜSSELTE DATEN, UND ENTSPRECHENDES VERFAHREN
DEVICE FOR PROTECTING ENCRYPTED DATA AND ASSOCIATED METHOD

(30) Priorité: 17.05.2019 FR 1905209
(43) Date de publication de la demande: 18.11.2020
(73) Titulaire: STMicroelectronics (Grenoble 2) SAS, 38000 Grenoble (FR); STMicroelectronics (Rousset) SAS, 13790 Rousset (FR)
(72) Inventeur: JOURNET, Fabien, 38000 GRENOBLE (FR); LINGE, Yanis, 13710 FUVEAU (FR)
(74) Mandataire: Casalonga

(56) Documents cités:
- US-A1- 2001 053 220
- US-A1- 2005 232 430

## Description

Des modes de mise en œuvre et de réalisation de l'invention concernent les circuits intégrés comportant des modules sécurisés, et en particulier la protection de ce type de circuit contre les analyses par canaux auxiliaires, connues par l'homme du métier sous la dénomination anglo-saxonne «Side channel analysis», et tout particulièrement contre les analyses des signaux électriques produits par le module sécurisé lors de son fonctionnement.

En fonctionnement, le module sécurisé produit des signaux électriques transitant par l'intermédiaire des pistes métalliques du circuit intégré.

Des données reçues par le module sécurisé sont chiffrées en utilisant une clé secrète formée par un masque statiques ou dynamiques et des données masquées. Le masque et les données masquées sont sauvegardés respectivement dans un premier et un deuxième registres de données du circuit intégré.

Le masque et les données masquées forment une clé secrète.

Les techniques de chiffrement peuvent mettre en œuvre une clé de session temporaire unique « session key » permettant le déchiffrement des données secrètes chiffrées, la clé de session étant fournie par un serveur certifié.

Les données sont chiffrées par exemple par un algorithme du type « AES », « Advanced Encryption Standard ».

Les masques protégeant la clé secrète sont rafraîchis en général au mieux une fois par opération de chiffrement.

En analysant les signaux électriques des registres contenant les données masquées et le masque dynamique ou statique, à l'aide par exemple d'une antenne et d'algorithmes mathématiques dédiés, il est possible d'obtenir des informations sur les opérations effectuées ainsi que sur les données manipulées et/ou sur leurs occurrences.

Pour protéger le module sécurisé d'une analyse par canaux auxiliaires, seules les données actualisées font l'objet d'un nouveau masquage.

Par conséquent, des signaux masqués demeurent inchangés pendant plusieurs cycles d'horloge.

Lorsqu'un signal sur une piste demeure inchangé pendant une durée suffisante, par exemple supérieure à 1 ms, une analyse par canaux auxiliaires mettant en œuvre un microscope à balayage permet de déterminer si la piste est à l'état logique « 0 » ou « 1 ».

En comparant simultanément l'état logique de la piste et les valeurs logiques aux bornes des premier et deuxième registres contenant le masque et les données masquées l'état logique d'un bit de donnée masquée et d'un bit de masquage peuvent être déterminés simultanément permettant le déchiffrement du bit de donnée masquée, la détermination des états logiques étant réalisée en analysant les pistes et les bornes à l'aide d'un microscope à balayage.

En réitérant l'opération de déchiffrement bit par bit, la donnée secrète peut être retrouvée.

La demande de brevet US 2005/232430 A1 en particulier divulgue un dispositif électronique sécurisé contre les attaques par canaux auxiliaires à l'aide d'un double masquage.

Il existe un besoin d'améliorer la protection des données masquées contre les analyses par canaux auxiliaires, notamment les analyses par canaux auxiliaires mettant en œuvre un microscope à balayage.

Selon des modes de mises en œuvre et de réalisation, il est avantageusement proposé de masquer de façon aléatoire les contenus de deux registres contenant respectivement un premier masque et des données masquées, et formant ensemble une clé secrète et de disposer les registres contenant la clé secrète de sorte que les sorties de ces registres ne soient pas optiquement visualisables simultanément.

Selon un aspect, il est proposé un procédé de protection des contenus de registres d'un module d'un circuit intégré, un premier registre contenant un premier masque et un deuxième registre contenant des données masquées, le premier masque et lesdites données masquées formant une clé secrète.

Le procédé comprend une génération de manière aléatoire d'un deuxième masque, un masquage de la clé secrète en utilisant le deuxième masque.

Ce deuxième masque peut être considéré comme un masque dynamique.

La génération du deuxième masque et le masquage de la clé secrète sont effectués lorsque la clé secrète n'est pas utilisée pour une opération de chiffrement et lors de la réception d'un signal de validation.

Les premier et deuxième registres sont disposés dans le module sécurisé de sorte que les sorties de ces registres ne soient pas optiquement visualisables simultanément.

En pratique un attaquant peut utiliser un microscope à balayage.

Selon un mode de mise en œuvre, on espace alors les deux registres d'une distance supérieure à la distance permettant de visualiser simultanément les deux registres ainsi que l'état de leurs sorties par un microscope à balayage, compte tenu de la résolution dudit microscope à balayage.

Comme la distance séparant les deux registres formant la clé secrète est choisie de façon que leurs sorties ne soient pas simultanément visualisables par un instrument optique, par exemple supérieure à la distance permettant de visualiser simultanément les deux registres ainsi que l'état de leurs sorties compte tenu de la résolution d'un microscope à balayage, il n'est pas possible de déterminer simultanément l'état des sorties des registres contenant la clé secrète.

Par ailleurs en combinaison avec la disposition éloignée des registres, le masquage de la clé secrète formée par les contenus des deux registres, à l'aide d'un masque dynamique permet d'empêcher une acquisition séquentielle de l'état des sorties des registres contenant la clé secrète.

De plus, l'élaboration du deuxième masque et le masquage de la clé secrète par le deuxième masque sont effectués de manière automatique et ne nécessitent pas l'intervention d'une unité de traitement permettant d'optimiser les ressources et la consommation du module sécurisé.

Selon un mode de mise en œuvre, le masquage de la clé secrète comprend l'application des premiers opérateurs logiques sur le deuxième masque et le contenu de chacun des premier et deuxième registres, et la génération du deuxième masque comprend :
- un tirage aléatoire d'une donnée initiale ayant une taille inférieure à celle du deuxième masque,
- une scission de la donnée initiale en plusieurs données (au moins deux) ayant chacune une taille inférieure à celle de la donnée initiale, et
- un assemblage des données par un deuxième opérateur logique.

Selon un autre mode de mise en œuvre, la donnée initiale est scindée du mot initial en une première donnée, une deuxième donnée et une troisième donnée ayant chacune une taille inférieure à celle de la donnée initiale, et les première, deuxième et troisième données sont assemblées par le deuxième opérateur logique.

Selon encore un autre mode de mise en œuvre, le masquage de la clé secrète utilise des premiers opérateurs logiques, et la génération du deuxième masque comprend :
- un tirage aléatoire d'une donnée initiale ayant une taille inférieure à celle du deuxième masque ;
- une scission de la donnée initiale en une première donnée, une deuxième donnée et une troisième donnée ayant chacun une taille inférieure à celle de la donnée initiale ;
- et un assemblage des première, deuxième et troisième données par un deuxième opérateur logique.

Selon encore un autre mode de mise en œuvre, les premiers opérateurs logiques et le deuxième opérateur logique comportent des opérateurs OU EXCLUSIF.

Selon encore un autre mode de mise en œuvre, la donnée initiale comporte une donnée de 32 bits, la première donnée comporte une donnée de 16 bits, la deuxième donnée et la troisième donnée comportent des données de 8 bits chacune.

Il suffit de tirer la donnée initiale de 32 bits pour créer le deuxième masque de par exemple 128 bits. La consommation d'énergie pour générer le deuxième masque est réduite.

Selon un mode de mise en œuvre, le procédé comprend une réitération, à chaque occurrence du signal de validation, de la génération du deuxième masque et du masquage de la clé secrète.

Chaque réitération comprend un écrasement des contenus des premier et deuxième registres respectivement par les contenus précédents de ces deux registres masqués par le deuxième masque.

Selon un autre mode de mise en œuvre, la durée séparant deux occurrences du signal de validation est choisie inférieure à la durée d'acquisition d'un dispositif de visualisation optique.

Selon encore un mode de mise en œuvre, la génération du signal de validation est aléatoire.

La durée maximale séparant deux occurrences du signal de validation est avantageusement choisie de sorte qu'elle soit inférieure à la durée d'acquisition d'un dispositif de visualisation optique, par exemple un microscope à balayage de telle sorte qu'il ne soit pas possible de déterminer l'état des sorties des premier et deuxième registres.

Selon un mode de mise en œuvre, les contenus des premier et deuxième registres sont modifiés après chaque opération de chiffrement utilisant ladite clé secrète.

De préférence, les premier et deuxième registres sont configurés pour stocker des données de 128 bits.

Selon un autre aspect, il est proposé un circuit intégré comprenant un module comprenant :
- un premier registre contenant un premier masque,
- un deuxième registre contenant des données masquées, le premier masque et lesdites données masquées formant une clé secrète, et
- des moyens de traitement configurés pour générer un deuxième masque et pour masquer la clé secrète avec le deuxième masque lorsque la clé secrète n'est pas utilisée pour une opération de chiffrement et lors de la réception d'un signal de validation.

Les premier et deuxième registres sont disposés dans le module sécurisé de sorte que les sorties de ces registres ne soient pas optiquement visualisables simultanément.

Selon un mode de réalisation, les deux registres sont séparés d'une distance supérieure à la distance permettant de visualiser simultanément les deux registres ainsi que l'état de leurs sorties par un microscope à balayage compte tenu de la résolution dudit microscope à balayage.

Selon un autre mode de réalisation, les moyens de traitement comportent des moyens de génération configurés pour générer le deuxième masque et des moyens de masquage comprenant des premiers opérateurs logiques aptes à masquer le contenu des premier et deuxième registres avec le deuxième masque, les moyens de génération comprenant :
- un générateur d'occurrence apte à générer le signal de validation,
- un générateur aléatoire apte à générer aléatoirement une donnée initiale ayant une taille inférieure à celle du deuxième masque, et
- un module de traitement apte à scinder la donnée initiale en des données ayant chacune une taille inférieure à celle de la donnée initiale, ledit module de traitement étant apte à assembler les données par un deuxième opérateur logique pour créer ledit deuxième masque.

Selon encore un autre mode de réalisation, le module de traitement est apte à scinder la donnée initiale en une première donnée, une deuxième donnée et une troisième donnée ayant une taille inférieure à celle de la donnée mot initiale, ledit module de traitement étant apte à assembler les première, deuxième et troisième données par le deuxième opérateur logique pour créer ledit deuxième masque.

Selon encore un autre mode de réalisation, les premiers opérateurs logiques et le deuxième opérateur logique comportent des opérateurs OU EXCLUSIF.

Avantageusement, la donnée initiale comporte une donnée de 32 bits, la première donnée comporte une donnée de 16 bits, la deuxième donnée et la troisième donnée comportent des données de 8 bits chacun.

Selon un mode de réalisation, les moyens de traitement sont aptes à générer le deuxième masque, à masquer la clé secrète et à écraser des contenus des premier et deuxième registres respectivement par les contenus précédents de ces deux registres à nouveau masqués par le deuxième masque à chaque occurrence du signal de validation.

Selon un autre mode de réalisation, la durée séparant deux occurrences du signal de validation est choisie inférieure à la durée d'acquisition d'un dispositif de visualisation optique.

Selon un autre mode de réalisation, le générateur d'occurrence est apte à générer aléatoirement le signal de validation.

Selon encore un autre mode de réalisation, le système comprend en outre des moyens aptes à transmettre la clé secrète aux premier et deuxième registres et aptes à modifier les contenus des premier et deuxième registres après chaque opération de chiffrement utilisant ladite clé secrète.

Selon encore un autre mode de réalisation, les premier et deuxième registres comprennent 128 bits.

Selon un autre aspect, il est proposé un appareil incorporant un circuit intégré tel que défini ci-avant.

D'autres avantages et caractéristiques de l'invention apparaîtront à l'examen de la description détaillée de modes de réalisation, nullement limitatifs, et des dessins annexés sur lesquels :
[Fig 1] illustre un exemple d'un mode de réalisation d'un circuit intégré ; et
[Fig 2] illustre un exemple de mise en œuvre du circuit intégré.

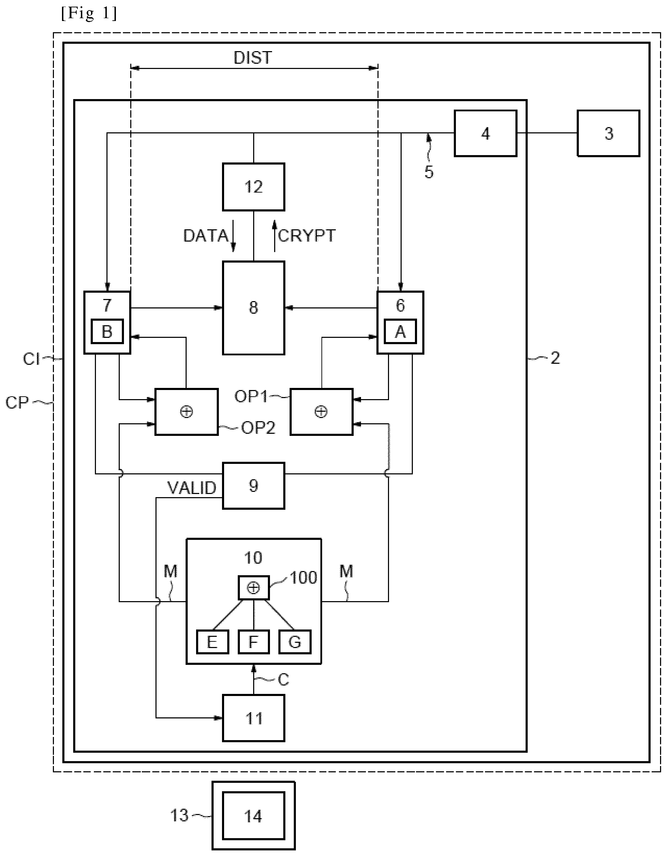

On se réfère à la figure 1 qui représente un exemple d'un mode de réalisation d'un circuit intégré CI, incorporé dans un appareil électronique CP, par exemple une carte à puce.

Le circuit intégré CI comprend un système de protection de données masquées comprenant un module 2, par exemple sécurisé et une première unité de traitement 3, par exemple sécurisée.

Le module sécurisé 2 comprend une interface 4 de communication reliée d'une part avec la première unité de traitement sécurisée 3 et, d'autre part, avec un bus 5 de données.

Le module 2 comprend en outre un premier et un deuxième registres 6 et 7 reliés chacun au bus 5, une deuxième unité de traitement 8 reliée aux premier et deuxième registres 6 et 7.

Le premier registre 6 comprend des données masquées A et le deuxième registre 7 comprend un premier masque B, le contenu des deux registres 6 et 7 formant une clé secrète.

Bien entendu, le masque B peut être contenu dans le premier registre 6 et les données masquées A peuvent être contenues dans le deuxième registre 7.

Le module 2 comprend en outre des moyens de traitement configurés pour générer un deuxième masque M et pour masquer la clé secrète avec le deuxième masque M, lorsque la clé secrète n'est pas utilisée pour une opération de chiffrement et lors de la réception d'un signal de validation VALID.

Le masquage de la clé secrète permet d'empêcher une acquisition séquentielle de l'état des sorties des registres contenant la clé secrète.

Les moyens de traitement comportent des moyens de génération configurés pour générer le deuxième masque et des moyens de masquage comprenant des premiers opérateurs OU EXCLUSIF OP1 et OP2 aptes à masquer le contenu des premier et deuxième registres 6 et 7 avec le deuxième masque M.

Les moyens de génération comprennent un générateur d'occurrence 9 apte à générer le signal de validation VALID, un générateur aléatoire apte à générer aléatoirement une donnée initiale C, et un module de traitement 10 apte à scinder la donnée initiale en une première donnée E, une deuxième donnée F et un troisième donnée G de taille inférieure à celle de la donnée initiale.

Le module de traitement 10 est apte à assembler les première, deuxième et troisième données par un deuxième opérateur logique 100.

Le module générateur d'occurrence 9 et le module de traitement 10 sont reliés chacun aux premier et deuxième registres 6 et 7, le générateur aléatoire 11 est relié au module de traitement 10 et au module générateur d'occurrence 9.

Le module de traitement 10 est en outre relié à une première entrée des opérateurs OP1 et OP2.

Une deuxième entrée de l'opérateur OP1 est reliée au premier registre 6, une deuxième entrée de l'opérateur OP2 est reliée au registre 7, une sortie de l'opérateur OP1 est reliée au premier registre 6 et une sortie de l'opérateur OP2 est reliée au deuxième registre 7, de sorte que lorsque le deuxième masque M est transmis à la première entrée des opérateurs OP1 et OP2 par le module de traitement, les opérateurs OP1 et OP2 masquent le contenu des premier et deuxième registres avec le deuxième masque M et masquent donc la clé secrète.

Les premier et deuxième registres 6 et 7 sont disposés dans le module sécurisé 2 de sorte que les sorties de ces registres ne soient pas optiquement visualisables simultanément, par exemple par un dispositif optique comprenant un microscope à balayage 13 ayant une chambre d'analyse et un écran 14.

Les deux registres sont séparés d'une distance DIST par exemple choisie de façon que sur l'écran 14 du microscope on ne puisse pas visualiser simultanément les deux registres 6 et 7 ainsi que l'état de leurs sorties compte tenu de la résolution du microscope.

A titre indicatif, une distance DIST d'au moins 80 µm est acceptable.

Comme la distance DIST séparant les deux registres formant la clé secrète est supérieure à la distance permettant de visualiser simultanément les deux registres 6 et 7 ainsi que l'état de leurs sorties compte tenu de la résolution du microscope, il n'est pas possible de déterminer simultanément l'état des sorties des registres contenant la clé secrète.

Le module 2 comprend en outre un troisième registre 12 relié d'un part au bus 5, et, d'autre part à une deuxième unité de traitement 8 qui utilise la clé secrète pour chiffrer des données d'entrée.

La première unité de traitement 3 communique avec le module sécurisé 2 par l'intermédiaire de l'interface 4 et du bus de données 5.

Le module sécurisé 2 est cadencé par une horloge non représentée.

Les premier, deuxième et troisième registres 6, 7 et 12 sont du type volatile, par exemple une mémoire volatile.

Le premier registre 6 comprend des données masquées A comportant 128 bits A[i], i variant de 1 à 128, et le deuxième registre 7 comprend un masque B comportant 128 bits B[j], j variant de 0 à 128.

Les premier et deuxième registres 6 et 7 contenant les données A et B sont configurés pour stocker des données de 128 bits.

Selon un autre mode de réalisation les données A et B formant la clé secrète peuvent comprendre plus ou moins de 128 bits, les premier et deuxième registres 6 et 7 étant configurés pour stocker les données masquées A et le masque B.

La division de la clé secrète en deux données A et B permet de protéger la clé secrète contre des attaques par canaux auxiliaires.

Les données masquées A et le masque B sont fournis par la première unité de traitement 3.

La première unité de traitement 3 est en outre apte à modifier les contenus des premier et deuxième registres 6 et 7 après chaque opération de chiffrement par l'unité 8 utilisant ladite clé secrète.

La première unité de traitement 3 fournit en outre des données d'entrée DATA destinées à être chiffrées.

Les données DATA sont sauvegardées dans le troisième registre 12.

La deuxième unité de traitement 8 est apte à chiffrer les données DATA contenues dans le troisième registre 12 à partir de la clé secrète contenue dans les premier et deuxième registres 6 et 7.

La deuxième unité de traitement 8 génère des données de sortie CRYPT correspondant aux données d'entrée DATA chiffrées.

Les données CRYPT sont sauvegardées dans le troisième registre 12 de manière à écraser les données DATA.

La deuxième unité de traitement 8 est réalisée par exemple à partir d'un microprocesseur, mais il peut s'agir de tout dispositif apte à chiffrer des données à partir d'une clé secrète contenue dans deux registres, et à sauvegarder les données chiffrées dans un registre.

La première unité de traitement 3 charge les données masquées A dans le premier registre 6 et charge le masque B dans le deuxième registre 7.

En outre, la première unité de traitement 3 charge les données à chiffrer DATA dans le troisième registre 12 et récupère les données chiffrées CRYPT sauvegardées dans le troisième registre 12.

La première unité de traitement 3 est réalisée par exemple à partir d'un microprocesseur, mais il peut s'agir de tout dispositif apte à charger les données masquées A dans le premier registre 6, apte à charger le masque B dans le deuxième registre 7, apte à charger les données à chiffrer DATA dans le troisième registre 12 et apte à récupérer les données chiffrées CRYPT sauvegardées dans le troisième registre 12.

Le module générateur d'occurrence 9 génère par exemple de manière aléatoire un signal de validation VALID.

En variante, le module générateur d'occurrence 9 génère de manière déterministe le signal de validation VALID.

Le signal VALID est transmis aux premier et deuxième registres 6 et 7, et au générateur aléatoire 11.

Le module générateur d'occurrence 9 est par exemple réalisé par un compteur comportant par exemple des bascules.

Dans ce qui suit, on suppose que la donnée initiale C comporte une donnée de 32 bits, la première donnée E comporte une donnée de 16 bits, la deuxième donnée F et la troisième donnée G comportent des données de 8 bits chacune, et le deuxième opérateur logique 100 comprend des opérateurs OU EXCLUSIF.

Le générateur aléatoire 11 effectue un tirage aléatoire, à la réception du signal VALID émis par le module générateur d'occurrence 9, de la donnée initiale C comportant 32 bits C[k], k variant de 1 à 32.

La donnée C est transmise au module de traitement 10.

A partir de la donnée C, le module de traitement 10 génère le deuxième masque M comportant 128 bits M[1], 1 variant de 1 à 128.

Plus précisément, l'unité de traitement 10 scinde la donnée initiale C de manière aléatoire de manière à obtenir les première, deuxième et troisième données E, F et G.

Puis le module de traitement 10 génère le masque M selon l'équation (1) : $\begin{matrix}M \left[1\right] = E \left[ENT\left[1 mod 16\right]\right] XOR F \left[ENT\left[1/16\right]\right] XOR \\ G \left[ENT\left[\left(1+1/16\right)mod 8\right]\right] , 1 variant de 1 à 128\end{matrix}$ où ENT[] est la partie entière, mod est le modulo, E est la donnée E comportant 16 bits E[p], p variant de 1 à 16, F est la donnée F comportant 8 bits F[q], q variant de 1 à 8, et G est la donnée G comportant 8 bits G[r], r variant de 1 à 8, et XOR est l'opérateur booléen OU EXCLUSIF 100.

Il suffit de tirer la donnée initiale C de 32 bits pour créer le deuxième masque M de 128 bits. La consommation d'énergie pour générer le deuxième masque M est réduite.

De plus, un générateur générant 32 bits prend moins de place sur le silicium qu'un générateur générant 128 bits.

Bien entendu, l'exemple de réalisation du masque M comportant 128 bits à partir de la donnée initiale C comportant 32 bits s'applique pour une donnée initiale de taille différente et pour un deuxième masque de taille différente.

En variante, la donnée initiale C peut être scindée en plusieurs données, par exemple deux ou plus de trois données, ayant chacune une taille inférieure à celle de la donnée initiale, le module de traitement 10 scindant la donnée initiale C en des données ayant chacune une taille inférieure à celle de la donnée initiale et assemblant les données par le deuxième opérateur logique 100 pour créer ledit deuxième masque M.

Les données de taille inférieure à celle de la donnée initiale C sont dimensionnées de sorte que le deuxième masque M soit de même taille que la clé secrète permettant d'utiliser des algorithmes de chiffrement mettant en œuvre des clés secrètes de tailles différentes.

Le module de traitement 10 est défini par exemple à partir de circuits logiques.

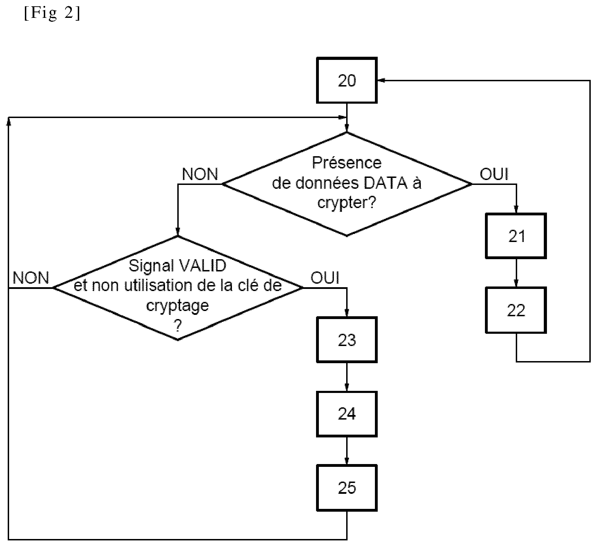

La figure 2 illustre un exemple de mise en œuvre du système 1 de protection de données masquées.

Durant par exemple une étape 20, la première unité de traitement 3 charge les données masquées A et le masque B dans les premier et deuxième registre 6 et 7.

En outre, la première unité de traitement 3 peut charger les données à chiffrer DATA dans le troisième registre 12.

Si le troisième registre 12 contient des données à chiffrer DATA, on poursuit par exemple à une étape 21.

Durant par exemple l'étape 21, la deuxième unité de traitement 8 chiffre les données DATA contenues dans le troisième registre 12 en utilisant la clé secrète formée par les données masquées A et le masque B contenus dans les premier et deuxième registres 6 et 7 pour obtenir les données chiffrées CRYPT.

Lorsque les données chiffrées CRYPT ont été générées par la deuxième unité de traitement 8, les données CRYPT sont sauvegardées dans le troisième registre 12 de manière à écraser le contenu précédent du troisième registre 12.

Puis dans par exemple une étape 22, lorsque les données CRYPT ont été sauvegardées dans le troisième registre 12, la première unité de traitement 3 charge, par exemple dans une mémoire interne, les données chiffrées CRYPT pour une utilisation ultérieure.

On revient alors à l'étape 20, dans laquelle la première unité de traitement 3 modifie les données masquées A et le masque B de sorte que le contenu des premier et deuxième registres 6 et 7 soit unique.

Les contenus des premier et deuxième registres 6 et 7 sont modifiés après chaque opération de chiffrement utilisant la clé secrète.

Si la clé secrète est utilisée ou si le module générateur d'occurrence 9 ne délivre pas de signal VALID, on revient à la fin de l'étape 20.

Si la clé secrète n'est pas utilisée et que le module générateur d'occurrence 9 délivre le signal VALID, on poursuit à une étape 23.

Durant l'étape 23, le générateur aléatoire 11 génère la donnée initiale C de 32 bits à la réception du signal VALID.

Puis par exemple à l'étape 24, module de traitement 10 génère le deuxième masque M selon l'équation (1).

Lorsque le deuxième masque M est généré, durant par exemple une étape 25, le contenu des premier et deuxième registres 6 et 7 est actualisé selon les équations : $A \left[i\right] = A \left[i\right] XOR M \left[i\right] ;$ et $B \left[i\right] = B \left[i\right] XOR M \left[i\right] ,$ i variant de 1 à 128 et n=0, XOR étant l'opérateur OU EXCLUSIF utilisé dans cet exemple à la fois par les opérateurs référencés OP1 et OP2.

Puis on revient à la fin de l'étape 20.

A chaque occurrence du signal de validation VALID, on réitère la génération du deuxième masque M et le masquage de la clé secrète avec le deuxième masque, et on écrase les contenus des premier et deuxième registres 6 et 7 respectivement par les contenus de ces deux registres masqués par le deuxième masque M.

La première unité de traitement 3 peut charger des données A et B dans les premier et deuxième registres 6 et 7, et des données DATA dans le troisième registre 12 tant que la deuxième unité de traitement 8 ne procède pas à au chiffrement de données DATA.

La durée maximale séparant deux occurrences du signal VALID est choisie de sorte qu'elle soit inférieure à la durée d'acquisition d'un dispositif de visualisation optique de telle sorte qu'il ne soit pas possible de déterminer l'état des sorties des premier et deuxième registres avant une opération de chiffrement de la clé secrète par le masque dynamique.

La durée maximale séparant deux occurrences du signal valide est par exemple inférieure à 1 ms.

De plus, l'élaboration du deuxième masque et le masquage de la clé secrète sont effectués de manière automatique et ne nécessitent pas l'intervention d'une unité de traitement permettant d'optimiser les ressources et la consommation.

## Revendications

1. Procédé de protection des contenus de registres (6, 7) d'un module (2) d'un circuit intégré, un premier registre (6) contenant un premier masque (B) et un deuxième registre (7) contenant des données masquées (A), le premier masque et lesdites données masquées formant une clé secrète, le procédé comprenant une génération de manière aléatoire d'un deuxième masque (M), un masquage de la clé secrète en utilisant le deuxième masque (M), la génération du deuxième masque et le masquage de la clé secrète étant effectués lorsque la clé secrète n'est pas utilisée pour une opération de chiffrement et lors de la réception d'un signal de validation (VALID),
ledit procédé étant **caractérisé en ce que** les premier et deuxième registres sont disposés dans le module sécurisé de sorte que les sorties de ces registres ne soient pas optiquement visualisables simultanément, et **en ce que** l' on espace les deux registres d'une distance (DIST) supérieure à la distance permettant de visualiser simultanément les deux registres ainsi que l'état de leurs sorties par un microscope à balayage compte tenu de la résolution dudit microscope à balayage (13).

2. Procédé selon la revendication 1, dans lequel le masquage de la clé secrète comprend l'application des premiers opérateurs logiques (OP1, OP2) sur le deuxième masque (M) et sur le contenu de chacun des premier (6) et deuxième (7) registres, et la génération du deuxième masque (M) comprend un tirage aléatoire d'une donnée initiale (C) ayant une taille inférieure à celle du deuxième masque, une scission de la donnée initiale en plusieurs données ayant chacune une taille inférieure à celle de la donnée initiale, et un assemblage des données par un deuxième opérateur logique.

3. Procédé selon la revendication 2, dans lequel la donnée initiale est scindée en une première donnée (E), une deuxième donnée (F) et une troisième (G) donnée ayant chacune une taille inférieure à celle de la donnée initiale, et les première, deuxième et troisième données sont assemblées par le deuxième opérateur logique (100).

4. Procédé selon l'une des revendications 2 et 3, dans lequel les premiers opérateurs logiques et le deuxième opérateur logique comportent des opérateurs OU EXCLUSIF.

5. Procédé selon l'une des revendications 3 et 4 dans sa dépendance à la revendication 3, dans lequel la donnée initiale comprend une donnée de 32 bits (C), la première donnée comporte une donnée de 16 bits (E), la deuxième donnée et la troisième donnée (G) comportent des données de 8 bits chacun, et l'opérateur logique comprend un opérateur OU EXCLUSIF (100).

6. Procédé selon l'une des revendications précédentes, comprenant une réitération, à chaque occurrence du signal de validation, de la génération du deuxième masque (M) et du masquage de la clé secrète, et chaque réitération comprend un écrasement des contenus des premier et deuxième registres (6, 7) respectivement par les contenus précédents de ces deux registres masqués par le deuxième masque (M).

7. Procédé selon la revendication 6, dans lequel la durée séparant deux occurrences du signal de validation (VALID) est choisie inférieure à la durée d'acquisition d'un dispositif de visualisation optique.

8. Procédé selon l'une des revendications précédentes, comprenant une génération aléatoire du signal de validation (VALID).

9. Procédé selon l'une des revendications précédentes, comprenant une modification des contenus des premier et deuxième registres (6, 7) après chaque opération de chiffrement utilisant ladite clé secrète.

10. Procédé selon l'une des revendications précédentes, dans lequel les premier et deuxième registres (6, 7) sont configurés pour stocker des données de 128 bits.

11. Circuit intégré (CI) comprenant un module (2) comprenant un premier registre (6) contenant un premier masque (B), un deuxième registre (7) contenant des données masquées (A), le premier masque et lesdites données masquées formant une clé secrète, et des moyens de traitement (9, 10, 11, OP1, OP2) configurés pour générer un deuxième masque (M) et pour masquer la clé secrète avec le deuxième masque lorsque la clé secrète n'est pas utilisée pour une opération de chiffrement et lors de la réception d'un signal de validation (VALID),
ledit circuit étant **caractérisé en ce que** les premier et deuxième registres sont disposés dans le module sécurisé de sorte que les sorties de ces registres ne soient pas optiquement visualisables simultanément, et **en ce que** les deux registres (6, 7) sont séparés d'une distance (DIST) supérieure à la distance permettant de visualiser simultanément les deux registres ainsi que l'état de leurs sorties par un microscope à balayage compte tenu de la résolution dudit microscope à balayage (13).

12. Circuit intégré (CI) selon la revendication 11, dans lequel les moyens de traitement comportent des moyens (9, 10, 11) de génération configurés pour générer le deuxième masque et des moyens de masquage comprenant des premiers opérateurs logiques (OP1, OP2) aptes à masquer le contenu des premier et deuxième registres (6, 7) avec le deuxième masque, les moyens de génération comprenant un générateur d'occurrence (9) apte à générer le signal de validation, un générateur aléatoire (11) apte à générer aléatoirement une donnée initiale ayant une taille inférieure à celle du deuxième masque et un module de traitement (10) apte à scinder la donnée initiale en des données ayant chacune une taille inférieure à celle de la donnée initiale, ledit module de traitement étant apte à assembler les données par un deuxième opérateur logique (100) pour créer ledit deuxième masque (M).

13. Circuit intégré (CI) selon la revendication 12, dans lequel le module de traitement (10) est apte à scinder la donnée initiale en une première donnée (E), une deuxième donnée (F) et une troisième (G) donnée ayant une taille inférieure à celle de la donnée initiale, ledit module de traitement étant apte à assembler les première, deuxième et troisième données par le deuxième opérateur logique (100) pour créer ledit deuxième masque (M).

14. Circuit intégré (CI) selon l'une des revendications 12 et 13, dans lequel les premiers opérateurs logiques et le deuxième opérateur logique comportent des opérateurs OU EXCLUSIF.

15. Circuit intégré (CI) selon l'une des revendications 13 et 14 dans sa dépendance à la revendication 13, dans lequel la donnée initiale comprend une donnée de 32 bits (C), la première donnée comprend une donnée de (E) 16 bits, la deuxième donnée et la troisième donnée (G) comportent des données de 8 bits chacun.

16. Circuit intégré (CI) selon l'une quelconque des revendications 11 à 15, dans lequel les moyens de traitement (9, 10, 11, OP1, OP2) sont aptes à générer le deuxième masque (M), à masquer la clé secrète et à écraser des contenus des premier et deuxième registres (6, 7) respectivement par les contenus précédents de ces deux registres à nouveau masqués par le deuxième masque à chaque occurrence du signal de validation.

17. Circuit intégré (CI) selon l'une quelconque des revendications 11 à 16, dans lequel la durée séparant deux occurrences du signal de validation (VALID) est choisie inférieure à la durée d'acquisition d'un dispositif de visualisation optique.

18. Circuit intégré (CI) selon l'une quelconque des revendications 11 à 16 prise en combinaison avec la revendication 14, dans lequel le générateur d'occurrence est apte à générer aléatoirement le signal de validation (VALID).

19. Circuit intégré (CI) selon l'une quelconque des revendications 11 à 18, comprenant en outre des moyens (3) aptes à transmettre la clé secrète aux premier et deuxième registres (6, 7) et aptes à modifier les contenus des premier et deuxième registres (6, 7) après chaque opération de chiffrement utilisant ladite clé secrète.

20. Circuit intégré (CI) selon l'une quelconque des revendications 11 à 19, dans lequel les premier et deuxième registres (6, 7) sont configurés pour stocker des données de 128 bits.

21. Appareil (CP) incorporant un circuit intégré selon l'une des revendications 11 à 20.

## Patentansprüche

1. Verfahren zum Schutz der Inhalte von Registern (6, 7) eines Moduls (2) einer integrierten Schaltung, wobei ein erstes Register (6) eine erste Maske (B) enthält und ein zweites Register (7) maskierte Daten (A) enthält, wobei die erste Maske und die maskierte Daten einen geheimen Schlüssel bilden, wobei das Verfahren das zufällige Erzeugen einer zweiten Maske (M) und das Maskieren des geheimen Schlüssels unter Verwendung der zweiten Maske (M) umfasst, wobei das Erzeugen der zweiten Maske und das Maskieren des geheimen Schlüssels durchgeführt werden, wenn der geheime Schlüssel nicht für einen Verschlüsselungsvorgang verwendet wird, sowie beim Empfang eines Validierungssignals (VALID),
wobei das Verfahren **dadurch gekennzeichnet ist, dass** das erste und das zweite Register so im gesicherten Modul angeordnet sind, dass die Ausgänge dieser Register nicht gleichzeitig optisch sichtbar sind, und dass die beiden Register um einen Abstand (DIST) voneinander beabstandet werden, der größer ist als der Abstand, der es ermöglicht, die beiden Register sowie den Zustand ihrer Ausgänge gleichzeitig durch ein Scanmikroskop unter Berücksichtigung der Auflösung des Scanmikroskops (13) zu betrachten.

2. Verfahren nach Anspruch 1, wobei das Maskieren des geheimen Schlüssels das Anwenden der ersten logischen Operatoren (OP1, OP2) auf die zweite Maske (M) und auf den Inhalt jedes des ersten (6) und des zweiten (7) Registers umfasst, und das Erzeugen der zweiten Maske (M) das zufällige Heranziehen eines ursprünglichen Datenelements (C), der eine Größe aufweist, die kleiner ist als die der zweiten Maske, das Aufteilen des ursprünglichen Datenelements in mehrere Daten, die jeweils kleiner sind als das ursprüngliche Datenelement, und das Zusammenführen der Daten durch einen zweiten logischen Operator umfasst.

3. Verfahren nach Anspruch 2, wobei das ursprüngliche Datenelement in ein erstes Datenelement (E), ein zweites Datenelement (F) und ein drittes Datenelement (G) aufgeteilt wird, die jeweils eine kleinere Größe als das ursprüngliche Datenelement aufweisen, und das erste, das zweite und das dritte Datenelement durch den zweiten logischen Operator (100) zusammengefügt werden.

4. Verfahren nach einem der Ansprüche 2 und 3, wobei die ersten logischen Operatoren und der zweite logische Operator EXKLUSIV-ODER-Operatoren umfassen.

5. Verfahren nach einem der Ansprüche 3 und 4 in Abhängigkeit von Anspruch 3, wobei das ursprüngliche Datenelement ein 32-Bit-Datenelement (C) umfasst, das erste Datenelement ein 16-Bit-Datenelement (E), das zweite Datenelement und das dritte Datenelement (G) jeweils 8-Bit-Datenelemente umfassen und der logische Operator einen EXKLUSIV-ODER-Operator (100) umfasst.

6. Verfahren nach einem der vorhergehenden Ansprüche, das eine Wiederholung, bei jedem Vorkommnis des Validierungssignals, des Erzeugens der zweiten Maske (M) und des Maskierens des geheimen Schlüssels umfasst, und wobei jede Wiederholung das Überschreiben der Inhalte des ersten und des zweiten Registers (6, 7) jeweils durch die vorherigen Inhalte dieser beiden Register, die durch die zweite Maske (M) maskiert sind, umfasst.

7. Verfahren nach Anspruch 6, wobei die Dauer zwischen zwei Vorkommnissen des Validierungssignals (VALID) so gewählt wird, dass sie kürzer ist als die Erfassungsdauer einer optischen Anzeigevorrichtung.

8. Verfahren nach einem der vorhergehenden Ansprüche, das das zufällige Erzeugen des Validierungssignals (VALID) umfasst.

9. Verfahren nach einem der vorhergehenden Ansprüche, das das Ändern der Inhalte des ersten und des zweiten Registers (6, 7) nach jedem Verschlüsselungsvorgang unter Verwendung des geheimen Schlüssels umfasst.

10. Verfahren nach einem der vorhergehenden Ansprüche, wobei das erste und das zweite Register (6, 7) so konfiguriert sind, dass sie 128-Bit-Daten speichern.

11. Integrierte Schaltung (IC), umfassend ein Modul (2), das ein erstes Register (6), das eine erste Maske (B) enthält, ein zweites Register (7), das maskierte Daten (A) enthält, wobei die erste Maske und die maskierten Daten einen geheimen Schlüssel bilden, und Verarbeitungsmittel (9, 10, 11, OP1, OP2) umfasst, die so konfiguriert sind, dass sie eine zweite Maske (M) erzeugen und den geheimen Schlüssel mit der zweiten Maske maskieren, wenn der geheime Schlüssel nicht für einen Verschlüsselungsvorgang verwendet wird, sowie beim Empfang eines Validierungssignals (VALID),
wobei die Schaltung **dadurch gekennzeichnet ist, dass** das erste und das zweite Register so im gesicherten Modul angeordnet sind, dass die Ausgänge dieser Register nicht gleichzeitig optisch sichtbar sind, und dass die beiden Register (6, 7) durch einen Abstand (DIST) voneinander getrennt sind, der größer ist als der Abstand, der es ermöglicht, die beiden Register sowie den Zustand ihrer Ausgänge gleichzeitig durch ein Scanmikroskop unter Berücksichtigung der Auflösung des Scanmikroskops (13) zu betrachten.

12. Integrierte Schaltung (IC) nach Anspruch 11, wobei die Verarbeitungsmittel Erzeugungsmittel (9, 10, 11), die so konfiguriert sind, dass sie die zweite Maske erzeugen, und Maskierungsmittel umfassen, die erste logische Operatoren (OP1, OP2) umfassen, die in der Lage sind, den Inhalt des ersten und des zweiten Registers (6, 7) mit der zweiten Maske zu maskieren, wobei die Erzeugungsmittel einen Vorkommnisgenerator (9), der in der Lage ist, das Validierungssignal zu erzeugen, einen Zufallsgenerator (11), der in der Lage ist, zufällig ein ursprüngliches Datenelement zu erzeugen, das eine kleinere Größe als die zweite Maske aufweist, und ein Verarbeitungsmodul (10) umfassen, das in der Lage ist, das ursprüngliche Datenelement in Daten aufzuteilen, die jeweils eine kleinere Größe als das ursprüngliche Datenelement aufweisen, wobei das Verarbeitungsmodul in der Lage ist, die Daten durch einen zweiten logischen Operator (100) zusammenzuführen, um die zweite Maske (M) zu erstellen.

13. Integrierte Schaltung (CI) nach Anspruch 12, wobei das Verarbeitungsmodul (10) in der Lage ist, das ursprüngliche Datenelement in ein erstes Datenelement (E), ein zweites Datenelement (F) und ein drittes Datenelement (G) aufzuteilen, die eine kleinere Größe als das ursprüngliche Datenelement aufweisen, wobei das Verarbeitungsmodul in der Lage ist, das erste, das zweite und das dritte Datenelement durch den zweiten logischen Operator (100) zusammenzuführen, um die zweite Maske (M) zu erstellen.

14. Integrierte Schaltung (IC) nach einem der Ansprüche 12 und 13, wobei die ersten logischen Operatoren und der zweite logische Operator EXKLUSIV-ODER-Operatoren umfassen.

15. Integrierte Schaltung (IC) nach einem der Ansprüche 13 und 14 in Abhängigkeit von Anspruch 13, wobei das ursprüngliche Datenelement ein 32-Bit-Datenelement (C) umfasst, das erste Datenelement ein (E) 16-Bit-Datenelement umfasst, das zweite Datenelement und das dritte Datenelement (G) jeweils 8-Bit-Datenelemente umfassen.

16. Integrierte Schaltung (IC) nach einem der Ansprüche 11 bis 15, wobei die Verarbeitungsmittel (9, 10, 11, OP1, OP2) in der Lage sind, die zweite Maske (M) zu erzeugen, den geheimen Schlüssel zu maskieren und Inhalte des ersten und des zweiten Registers (6, 7) jeweils durch die vorhergehenden Inhalte dieser beiden Register zu überschreiben, die bei jedem Vorkommnis des Validierungssignals wieder von der zweiten Maske maskiert werden.

17. Integrierte Schaltung (IC) nach einem der Ansprüche 11 bis 16, wobei die Dauer zwischen zwei Vorkommnissen des Validierungssignals (VALID) so gewählt wird, dass sie kürzer ist als die Erfassungsdauer einer optischen Anzeigevorrichtung.

18. Integrierte Schaltung (IC) nach einem der Ansprüche 11 bis 16 in Kombination mit Anspruch 14, wobei der Vorkommnisgenerator in der Lage ist, das Validierungssignal (VALID) zufällig zu erzeugen.

19. Integrierte Schaltung (IC) nach einem der Ansprüche 11 bis 18, ferner umfassend Mittel (3), die in der Lage sind, den geheimen Schlüssel an das erste und das zweite Register (6, 7) zu übertragen, und in der Lage sind, die Inhalte des ersten und des zweiten Registers (6, 7) nach jedem Verschlüsselungsvorgang unter Verwendung des geheimen Schlüssels zu ändern.

20. Integrierte Schaltung (IC) nach einem der Ansprüche 11 bis 19, wobei das erste und das zweite Register (6, 7) so konfiguriert sind, dass sie 128-Bit-Daten speichern.

21. Gerät (CP), in dem eine integrierte Schaltung nach einem der Ansprüche 11 bis 20 eingebaut ist.

## Claims

1. Method for protecting the contents of registers (6, 7) of a module (2) of an integrated circuit, a first register (6) containing a first mask (B) and a second register (7) containing masked data (A), the first mask and said masked data forming a secret key, the method comprising randomly generating a second mask (M), masking the secret key using the second mask (M), generating the second mask and masking the secret key being performed when the secret key is not being used for an encryption operation and upon receipt of a validation signal (VALID),
said method being **characterised in that** the first and second registers are disposed in the secured module so that the outputs of these registers cannot be optically viewed simultaneously, and **in that** the two registers are spaced by a distance (DIST) larger than the distance allowing viewing the two registers simultaneously as well as the status of their outputs using a scanning microscope, given the resolution of said scanning microscope (13).

2. Method according to claim 1, wherein the masking of the secret key comprises applying first logical operators (OP1, OP2) to the second mask (M) and to the content of each of the first (6) and second (7) registers, and the generation of the second mask (M) comprises randomly selecting an initial data item (C) having a size smaller than that of the second mask, splitting the initial data item into several data items, each having a size smaller than that of the initial data item, and assembling the data items using a second logical operator.

3. Method according to claim 2, wherein the initial data is split into a first data item (E), a second data item (F) and a third data item (G) each having a size smaller than that of the initial data, and the first, second and third data items are combined by the second logical operator (100).

4. Method according to any one of claims 2 and 3, wherein the first logical operators and the second logical operator comprise XOR operators.

5. Method according to any one of claims 3 and 4, as dependent on claim 3, wherein the initial data comprises 32-bit data (C), the first data item comprises 16-bit data (E), the second data item and the third data item (G) each comprise 8-bit data, and the logical operator comprises an XOR operator (100).

6. Method according to any one of the preceding claims, comprising, upon each occurrence of the validation signal, repeating the generation of the second mask (M) and masking of the secret key, and each repetition comprises overwriting the contents of the first and second registers (6, 7) respectively by the previous contents of these two registers masked by the second mask (M).

7. Method according to claim 6, wherein the time interval separating two occurrences of the validation signal (VALID) is selected to be shorter than the acquisition time of an optical display device.

8. Method according to any one of the preceding claims, comprising randomly generating the validation signal (VALID).

9. Method according to any one of the preceding claims, comprising modifying the contents of the first and second registers (6, 7) after each encryption operation using said secret key.

10. Method according to any one of the preceding claims, wherein the first and second registers (6, 7) are configured to store 128-bit data.

11. Integrated circuit (IC) comprising a module (2) comprising a first register (6) containing a first mask (B), a second register (7) containing masked data (A), the first mask and said masked data forming a secret key, and processing means (9, 10, 11, OP1, OP2) configured to generate a second mask (M) and to mask the secret key with the second mask when the secret key is not being used for an encryption operation and upon receipt of a validation signal (VALID),
said circuit being **characterised in that** the first and second registers are disposed in the secured module so that the outputs of these registers cannot be optically viewed simultaneously, and **in that** the two registers (6, 7) are separated by a distance (DIST) larger than the distance required to view the two registers simultaneously as well as the status of their outputs using a scanning microscope, given the resolution of said scanning microscope (13).

12. Integrated circuit (IC) according to claim 11, wherein the processing means comprise generation means (9, 10, 11) configured to generate the second mask and masking means comprising first logical operators (OP1, OP2) capable of masking the contents of the first and second registers (6, 7) with the second mask, the generation means comprising an occurrence generator (9) capable of generating the validation signal, a random generator (11) capable of randomly generating initial data having a size smaller than that of the second mask, and a processing module (10) capable of splitting the initial data into data items, each having a size smaller than that of the initial data, said processing module being capable of combining the data items using a second logical operator (100) to create said second mask (M).

13. Integrated circuit (CI) according to claim 12, wherein the processing module (10) is capable of splitting the initial data into a first data item (E), a second data item (F) and a third data item (G) having a size smaller than that of the initial data, said processing module being capable of combining the first, second and third data items using the second logical operator (100) to create said second mask (M).

14. Integrated circuit (IC) according to any one of claims 12 and 13, wherein the first logical operators and the second logical operator comprise XOR operators.

15. Integrated circuit (CI) according to any one of claims 13 and 14, as dependent on claim 13, wherein the initial data comprises 32-bit data (C), the first data item comprises 16-bit data (E), the second data item and the third data item (G) each comprise 8-bit data.

16. Integrated circuit (IC) according to any one of claims 11 to 15, wherein the processing means (9, 10, 11, OP1, OP2) are capable of generating the second mask (M), masking the secret key and overwriting contents of the first and second registers (6, 7) respectively with the previous contents of these two registers which are again masked by the second mask at each occurrence of the validation signal.

17. Integrated circuit (IC) according to any one of claims 11 to 16, wherein the time interval separating two occurrences of the validation signal (VALID) is selected to be shorter than the acquisition time of an optical display device.

18. Integrated circuit (IC) according to any one of claims 11 to 16 in combination with claim 14, wherein the occurrence generator is capable of randomly generating the validation signal (VALID).

19. Integrated circuit (CI) according to any one of claims 11 to 18, further comprising means (3) capable of transmitting the secret key to the first and second registers (6, 7) and capable of modifying the contents of the first and second registers (6, 7) after each encryption operation using said secret key.

20. Integrated circuit (IC) according to any one of claims 11 to 19, wherein the first and second registers (6, 7) are configured to store 128-bit data.

21. Device (CP) incorporating an integrated circuit according to any one of claims 11 to 20.
